(19) Europäisches Patentamt
European Patent Office
Office européen des brevets

(11) EP 2 602 102 A1

# (12) EUROPEAN PATENT APPLICATION

(43) Date of publication:
**12.06.2013 Bulletin 2013/24**

(21) Application number: **11191865.2**

(22) Date of filing: **05.12.2011**

(51) Int Cl.:
***B32B 1/08*** *(2006.01)*
***C08F 210/06*** *(2006.01)*
***C08J 5/18*** *(2006.01)*
***B32B 27/32*** *(2006.01)*
***F16L 11/04*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Basell Poliolefine Italia S.r.l.**
**20127 Milano (IT)**

(72) Inventors:
- **Cavalieri, Claudio**
  **44123 Ferrara (IT)**
- **Galvan, Monica**
  **45030 S.Maria Maddalena (RO) (IT)**
- **Caputo, Tiziana**
  **44121 Ferrara (IT)**
- **Terwyen, Herbert**
  **65239 Hochheim (DE)**

(74) Representative: **Sacco, Marco**
**Basell Poliolefine Italia S.r.l.**
**Intellectual Property**
**P.le Donegani, 12**
**44122 Ferrara (IT)**

## (54) Propylene-based terpolymers for pipes

(57) A terpolymer containing propylene, ethylene and 1-hexene wherein:
(i) the content of 1-hexene derived units ranges from 1 wt% to 2.6 wt%;
(ii) the content of ethylene derived units is higher than 0.7 wt% and fulfils the following relation (1):

$$C2<C6-0.2 \quad (1)$$

wherein C2 is the content of ethylene derived units wt% and C6 is the content of 1-hexene derived units wt%;
(iii) the melt flow rate (MFR) (ISO 1133 230°C, 2.16 kg) ranges from 0.5 to 3.9 g/10 min;
(iv) the melting temperature ranging from 130° C to 138° C; preferably from 132°C to 136°C.

EP 2 602 102 A1

## Description

The present invention relates to a propylene/ethylene/1-hexene terpolymer particularly fit for the production of pipes especially for small diameter pipes.

Propylene/ethylene/1-hexene terpolymers are already known in the art for the production of pipes. For example WO2006/002778 relates to a pipe system comprising a terpolymer of propylene/ethylene and alpha olefin wherein the ethylene content is from 0 to 9% by mol, preferably from 1 to 7% by mol and the 1-hexene content ranges from 0.2 to 5% wt. When small diameter pipes are needed it is important to have limited wall thickness of the pipe. This allows to obtain pipes containing less material and above all to improve the efficiency of the pipe in terms of feed due to the higher internal diameter. However when the wall thickness become small the pipe could become brittle, thus it is necessary to use a material having high impact resistance, especially at low temperature.

The applicant found that it is possible to select from these ranges a composition having improved properties in particular improved impact properties to be used for small diameter pipes.

Thus an object of the present inventions is a terpolymer containing propylene, ethylene and 1-hexene wherein

(i) the content of 1-hexene derived units ranges from 1 wt% to 3.2 wt %; preferably from 1.5 wt% to 3.0 wt%; more preferably from 1.5wt% to 2.8 wt%; even more preferably from 1.8wt% to 2.6 wt%; such as 1.8-2.4 wt%;

(ii) the content of ethylene derived units is higher than 1.4 wt% preferably higher than 1.5 wt% even more preferably higher than 1.6 wt% and fulfils the following relation (1):

$$C2<C6-0.2 \quad (1)$$

wherein C2 is the content of ethylene derived units wt% and C6 is the content of 1-hexene derived units wt%; preferably the relation (1) is C2<C6-0.3; more preferably C2<C6-0.5;

(iii) the melt flow rate (MFR) (ISO 1133 230°C, 5 kg) ranges from 0.1 to 3.9 g/10 min; preferably from 0.5 to 1.9 g/10 min;

(iv) the melting temperature ranging from 130° C to 138° C; preferably from 132°C to 136°C.

The terpolymers of the present invention have a stereoregularity of isotactic type of the propylenic sequences this is clear by the low value of xylene extractables that is lower than 10%wt: preferably lower than 8%wt; more preferably lower than 7%wt

Preferably the terpolymer of the present invention has a polydispersity index (PI) ranges from 2.0 to 7.0, preferably from 3.0 to 6.5, more preferably from 3.5 to 6.0.

The crystallization temperature preferably ranges from 70°C to 100°C, preferably from 80°C to 97°C; more preferably from 85°C to 97°C.

With the terpolymer of the present invention it is possible to obtain pipes, in particular small diameters pipes having a particularly small wall thickness fit to be used even under pressure. Said pipes giving a results of 0 pipes broken every 10 at the impact test at 0°C (ISO 9854).

Preferably the pipe according to the present invention shows an hydraulic pressure resistance (ISO method 1167-1) measured at 95°C and a pressure of 4.8 MPa higher than 500 hours; more preferably higher than 550 hours; even more preferably higher than 580 hours even more preferably higher than 600 hours.

Thus a further object of the present invention is a pipe comprising the terpolymer of the present invention.

The term "pipe" as used herein also includes pipe fittings, valves and all parts which are commonly necessary for e.g. a hot water piping system. Also included within the definition are single and multilayer pipes, where for example one or more of the layers is a metal layer and which may include an adhesive layer.

Such articles can be manufactured through a variety of industrial processes well known in the art, such as for instance moulding, extrusion, and the like.

In a further embodiment of the invention, the terpolymer of the present invention further comprises an inorganic filler agent in an amount ranging from 0.5 to 60 parts by weight with respect to 100 parts by weight of the said heterophasic polypropylene composition. Typical examples of such filler agents are calcium carbonate, barium sulphate, titanium bioxide and talc. Talc and calcium carbonate are preferred. A number of filler agents can also have a nucleating effect, such as talc that is also a nucleating agent. The amount of a nucleating agent is typically from 0.2 to 5 wt% with respect to the polymer amount.

The terpolymer of the invention is also suitable for providing polypropylene pipes with walls of any configuration other than those with smooth inner and outer surface. Examples are pipes with a sandwich-like pipe wall, pipes with a hollow wall construction with longitudinally extending cavities, pipes with a hollow wall construction with spiral cavities, pipes with a smooth inner surface and a compact or hollow, spirally shaped, or an annularly ribbed outer surface,

independently of the configuration of the respective pipe ends.

Articles, pressure pipes and related fittings according to the present invention are produced in a manner known per se, e.g. by (co-)extrusion or moulding, for instance.

Extrusion of articles can be made with different type of extruders for polyolefin, e.g. single or twin screw extruders.

A further embodiment of the present invention is a process wherein the said heterophasic polymer composition is moulded into said articles.

When the pipes are multi-layer, at least one layer is made of the terpolymer described above. The further layer(s) is/are preferably made of an amorphous or crystalline polymer (such as homopolymer and co- or terpolymer) of R-$CH=CH_2$ olefins, where R is a hydrogen atom or a $C_1$-$C_6$ alkyl radical. Particularly preferred are the following polymers:

1) isotactic or mainly isotactic propylene homopolymers;
2) random co- and terpolymers of propylene with ethylene and/or $C_4$-$C_8$ $\alpha$-olefin, such as 1-butene, 1-hexene, 1-octene, 4-methyl-1-pentene, wherein the total comonomer content ranges from 0.05% to 20% by weight, or mixture of said polymers with isotactic or mainly isotactic propylene homopolymers;
3) heterophasic polymer blends comprising (a) a propylene homopolymer and/or one of the co- and terpolymers of item (2), and an elastomeric moiety (b) comprising co- and terpolymers of ethylene with propylene and/or a $C_4$-$C_8$ $\alpha$-olefin, optionally containing minor amounts of a diene, the same disclosed for polymer (2)(a); and
4) amorphous polymers such as fluorinated polymers, polyvinyl difluoride (PVDF) for example.

In multi-layer pipes the layers of the pipe can have the same or different thickness.

The terpolymer used in the present invention can be prepared by polymerisation in one or more polymerisation steps. Such polymerisation can be carried out in the presence of Ziegler-Natta catalysts. An essential component of said catalysts is a solid catalyst component comprising a titanium compound having at least one titanium-halogen bond, and an electron-donor compound, both supported on a magnesium halide in active form. Another essential component (co-catalyst) is an organoaluminium compound, such as an aluminium alkyl compound.

An external donor is optionally added.

The catalysts generally used in the process of the invention are capable of producing polypropylene with a value of xylene insolubility at ambient temperature greater than 90%, preferably greater than 95%.

Catalysts having the above mentioned characteristics are well known in the patent literature; particularly advantageous are the catalysts described in US patent 4,399,054 and European patent 45977. Other examples can be found in US patent 4,472,524.

The solid catalyst components used in said catalysts comprise, as electron-donors (internal donors), compounds selected from the group consisting of ethers, ketones, lactones, compounds containing N, P and/or S atoms, and esters of mono- and dicarboxylic acids. Particularly suitable electron-donor compounds are esters of phtalic acid and 1,3-diethers of formula:

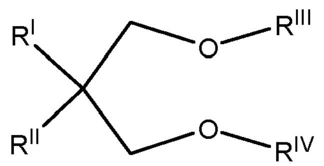

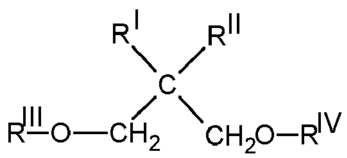

wherein $R^I$ and $R^{II}$ are the same or different and are $C_1$-$C_{18}$ alkyl, $C_3$-$C_{18}$ cycloalkyl or $C_7$-$C_{18}$ aryl radicals; $R^{III}$ and $R^{IV}$ are the same or different and are $C_1$-$C_4$ alkyl radicals; or are the 1,3-diethers in which the carbon atom in position 2 belongs to a cyclic or polycyclic structure made up of 5, 6, or 7 carbon atoms, or of 5-n or 6-n' carbon atoms, and respectively n nitrogen atoms and n' heteroatoms selected from the group consisting of N, O, S and Si, where n is 1 or 2 and n' is 1, 2, or 3, said structure containing two or three unsaturations (cyclopolyenic structure), and optionally being condensed with other cyclic structures, or substituted with one or more substituents selected from the group consisting of linear or branched alkyl radicals; cycloalkyl, aryl, aralkyl, alkaryl radicals and halogens, or being condensed with other

cyclic structures and substituted with one or more of the above mentioned substituents that can also be bonded to the condensed cyclic structures; one or more of the above mentioned alkyl, cycloalkyl, aryl, aralkyl, or alkaryl radicals and the condensed cyclic structures optionally containing one or more heteroatom(s) as substitutes for carbon or hydrogen atoms, or both.

Ethers of this type are described in published European patent applications 361493 and 728769.

Representative examples of said diethers are 2-methyl-2-isopropyl-1,3-dimethoxypropane, 2,2-diisobutyl-1,3-dimethoxypropane, 2-isopropyl-2-cyclopentyl-1,3-dimethoxypropane, 2-isopropyl-2-isoamyl-1,3-dimethoxypropane, 9,9-bis (methoxymethyl) fluorene.

Other suitable electron-donor compounds are phthalic acid esters, such as diisobutyl, dioctyl, diphenyl and benzylbutyl phthalate.

The preparation of the above mentioned catalyst component is carried out according to various methods.

For example, a $MgCl_2 \cdot nROH$ adduct (in particular in the form of spheroidal particles) wherein n is generally from 1 to 3 and ROH is ethanol, butanol or isobutanol, is reacted with an excess of $TiCl_4$ containing the electron-donor compound. The reaction temperature is generally from 80 to 120° C. The solid is then isolated and reacted once more with $TiCl_4$, in the presence or absence of the electron-donor compound, after which it is separated and washed with aliquots of a hydrocarbon until all chlorine ions have disappeared.

In the solid catalyst component the titanium compound, expressed as Ti, is generally present in an amount from 0.5 to 10% by weight. The quantity of electron-donor compound which remains fixed on the solid catalyst component generally is 5 to 20% by moles with respect to the magnesium dihalide.

The titanium compounds, which can be used for the preparation of the solid catalyst component, are the halides and the halogen alcoholates of titanium. Titanium tetrachloride is the preferred compound.

The reactions described above result in the formation of a magnesium halide in active form. Other reactions are known in the literature, which cause the formation of magnesium halide in active form starting from magnesium compounds other than halides, such as magnesium carboxylates.

The Al-alkyl compounds used as co-catalysts comprise the Al-trialkyls, such as Al-triethyl, Al-triisobutyl, Al-tri-n-butyl, and linear or cyclic Al-alkyl compounds containing two or more Al atoms bonded to each other by way of O or N atoms, or $SO_4$ or $SO_3$ groups.

The Al-alkyl compound is generally used in such a quantity that the Al/Ti ratio be from 1 to 1000.

The electron-donor compounds that can be used as external donors include aromatic acid esters such as alkyl benzoates, and in particular silicon compounds containing at least one Si-OR bond, where R is a hydrocarbon radical.

Examples of silicon compounds are (tert-butyl)$_2$Si(OCH$_3$)$_2$, (cyclohexyl)(methyl)Si (OCH$_3$)$_2$, (cyclopentyl)$_2$Si (OCH$_3$)$_2$ and (phenyl)$_2$Si(OCH$_3$)$_2$ and (1,1,2-trimethylpropyl)Si(OCH$_3$)$_3$.

1,3-diethers having the formulae described above can also be used advantageously. If the internal donor is one of these diethers, the external donors can be omitted.

In particular, even if many other combinations of the previously said catalyst components may allow to obtain propylene polymer compositions according to the present invention, the terpolymers are preferably prepared by using catalysts containing a phthalate as internal donor and (cyclopentyl)$_2$Si(OCH$_3$)$_2$ as outside donor, or the said 1,3-diethers as internal donors.

The said propylene-ethylene-hexene-1 polymers are produced with a polymerization process illustrated in EP application 1 012 195.

In detail, the said process comprises feeding the monomers to said polymerisation zones in the presence of catalyst under reaction conditions and collecting the polymer product from the said polymerisation zones. In the said process the growing polymer particles flow upward through one (first) of the said polymerisation zones (riser) under fast fluidisation conditions, leave the said riser and enter another (second) polymerisation zone (downcomer) through which they flow downward in a densified form under the action of gravity, leave the said downcomer and are reintroduced into the riser, thus establishing a circulation of polymer between the riser and the downcomer.

In the downcomer high values of density of the solid are reached, which approach the bulk density of the polymer. A positive gain in pressure can thus be obtained along the direction of flow, so that it become to possible to reintroduce the polymer into the riser without the help of special mechanical means. In this way, a "loop" circulation is set up, which is defined by the balance of pressures between the two polymerisation zones and by the head loss introduced into the system.

Generally, the condition of fast fluidization in the riser is established by feeding a gas mixture comprising the relevant monomers to the said riser. It is preferable that the feeding of the gas mixture is effected below the point of reintroduction of the polymer into the said riser by the use, where appropriate, of gas distributor means. The velocity of transport gas into the riser is higher than the transport velocity under the operating conditions, preferably from 2 to 15 m/s.

Generally, the polymer and the gaseous mixture leaving the riser are conveyed to a solid/gas separation zone. The solid/gas separation can be effected by using conventional separation means. From the separation zone, the polymer enters the downcomer. The gaseous mixture leaving the separation zone is compressed, cooled and transferred, if

appropriate with the addition of make-up monomers and/or molecular weight regulators, to the riser. The transfer can be effected by means of a recycle line for the gaseous mixture. The control of the polymer circulating between the two polymerisation zones can be effected by metering the amount of polymer leaving the downcomer using means suitable for controlling the flow of solids, such as mechanical valves.

The operating parameters, such as the temperature, are those that are usual in olefin polymerisation process, for example between 50 to 120° C.

This first stage process can be carried out under operating pressures of between 0.5 and 10 MPa, preferably between 1.5 to 6 MPa.

Advantageously, one or more inert gases are maintained in the polymerisation zones, in such quantities that the sum of the partial pressure of the inert gases is preferably between 5 and 80% of the total pressure of the gases. The inert gas can be nitrogen or propane, for example.

The various catalysts are fed up to the riser at any point of the said riser. However, they can also be fed at any point of the downcomer. The catalyst can be in any physical state, therefore catalysts in either solid or liquid state can be used.

The following examples are given to illustrate the present invention without limiting purpose.

**Examples**

**Characterization methods**

**[0049]** - Melting temperature and crystallization temperature: Determined by differential scanning calorimetry (DSC). weighting 6 ±1 mg, is heated to 220 ±1° C at a rate of 20 °C/min and kept at 220 ±1° C for 2 minutes in nitrogen stream and it is thereafter cooled at a rate of 20° C/min to 40 ±2° C, thereby kept at this temperature for 2 min to crystallise the sample. Then, the sample is again fused at a temperature rise rate of 20° C/min up to 220° C ±1. The melting scan is recorded, a thermogram is obtained, and, from this, melting temperatures and crystallization temperatures are read.

- Melt Flow Rate: Determined according to the method ISO 1133 (230° C, 5 kg).
- Solubility in xylene: Determined as follows.

2.5 g of polymer and 250 ml of xylene are introduced in a glass flask equipped with a refrigerator and a magnetical stirrer. The temperature is raised in 30 minutes up to the boiling point of the solvent. The so obtained clear solution is then kept under reflux and stirring for further 30 minutes. The closed flask is then kept for 30 minutes in a bath of ice and water and in thermostatic water bath at 25° C for 30 minutes as well. The so formed solid is filtered on quick filtering paper. 100 ml of the filtered liquid is poured in a previously weighed aluminium container, which is heated on a heating plate under nitrogen flow, to remove the solvent by evaporation. The container is then kept on an oven at 80° C under vacuum until constant weight is obtained. The weight percentage of polymer soluble in xylene at room temperature is then calculated.

- 1-hexene and ethylene content: Determined by $^{13}C$-NMR spectroscopy in terpolymers:

**NMR analysis.** $^{13}C$ NMR spectra are acquired on an AV-600 spectrometer operating at 150.91 MHz in the Fourier transform mode at 120 °C. The peak of the propylene CH was used as internal reference at 28.83. The $^{13}C$ NMR spectrum is acquired using the following parameters:

| | |
|---|---|
| Spectral width (SW) | 60 ppm |
| Spectrum centre (O1) | 30 ppm |
| Decoupling sequence | WALTZ 65_64pl |
| Pulse program (1) | ZGPG |
| Pulse Length (P1) (2)\ | for 90° |
| Total number of points (TD) | 32K |
| Relaxation Delay (2) | 15 s |
| Number of transients (3) | 1500 |

The total amount of 1-hexene and ethylene as molar percent is calculated from diad using the following relations:

$$[P] = PP + 0.5PH + 0.5PE$$

$$[H] = HH + 0.5PH$$

$$[E] = EE + 0.5PE$$

Assignments of the $^{13}C$ NMR spectrum of propylene/1-hexene/ethylene copolymers have been calculated according to the following table:

| Area | Chemical Shift | Assignments | Sequence |
|---|---|---|---|
| 1 | 46.93 - 46.00 | $S_{\alpha\alpha}$ | PP |
| 2 | 44.50 - 43.82 | $S_{\alpha\alpha}$ | PH |
| 3 | 41.34 -4.23 | $S_{\alpha\alpha}$ | HH |
| 4 | 38.00 - 37.40 | $S_{\alpha\gamma}$ + $S_{\alpha\delta}$ | PE |
| 5 | 35.70 -35.0 | $4B_4$ | H |
| 6 | 35.00 - 34.53 | $S_{\alpha\gamma}$+ $S_{\alpha\delta}$ | HE |
| 7 | 33.75 33.20 | CH | H |
| 8 | 33.24 | $T_{\delta\delta}$ | EPE |
| 9 | 30.92 | $T_{\beta\delta}$ | PPE |
| 10 | 30.76 | $S_{\gamma\gamma}$ | XEEX |
| 11 | 30.35 | $S_{\gamma\delta}$ | XEEE |
| 12 | 29.95 | $S_{\delta\delta}$ | EEE |
| 13 | 29.35 | $3B_4$ | H |
| 14 | 28.94 - 28.38 | CH | P |
| 15 | 27.43 - 27.27 | $S_{\beta\delta}$ | XEE |
| 16 | 24.67 -24.53 | $S_{\beta\beta}$ | XEX |
| 17 | 23.44 -23.35 | $2B_4$ | H |
| 18 | 21.80 - 19.90 | $CH_3$ | P |
| 19 | 14.22 | $CH_3$ | H |

Elongation at yield: measured according to ISO 527.
Elongation at break: measured according To ISO 527
Stress at break: measured according to ISO 527.
Impact test: ISO 9854
Hydraulic pressure resistance: measured according ISO method 1167-1
Samples for the mechanical analysis
Samples have been obtained according to ISO 294-2
Flexural Modulus
Determined according to ISO 178.
Tensile modulus
Determined according to ISO 527

**Example 1 and comparative example 2**

Copolymers are prepared by polymerising propylene, ethylene and hexene-1 in the presence of a catalyst under continuous conditions in a plant comprising a polymerisation apparatus as described in EP 1 012 195.

The catalyst is sent to the polymerisation apparatus that comprises two interconnected cylindrical reactors, riser and downcomer. Fast fluidisation conditions are established in the riser by recycling gas from the gas-solid separator. In examples 1-5 no barrier feed has been used.

The catalyst employed comprises a catalyst component prepared by analogy with example 5 of EP-A-728 769

but using microspheroidal $MgCl_2 \cdot 1.7C_2H_5OH$ instead of $MgCl_2 \cdot 2.1C_2H_5OH$. Such catalyst component is used with dicyclopentyl dimethoxy silane (DCPMS) as external donor and with triethylaluminium (TEA).

The polymer particles exiting the reactor are subjected to a steam treatment to remove the reactive monomers and volatile substances and then dried. The main operative conditions and characteristics of the produced polymers are indicated in Table 1.

Table 1

| Examples | | 1 | COMP 2 |
|---|---|---|---|
| TEA/solid catalyst component, g/g | | 4 | 5 |
| TEA/DCPMS, g/g | | 4 | 5 |
| $C_6/(C_3+C_6)$, mol/mol | Riser | 0.03 | 0.03 |
| $C_6/(C_3+C_6)$, mol/mol | Downcomer | 0.038 | 0.038 |
| $C_2/(C_3+C_2)$, mol/mol | Riser | 0.023 | 0.022 |
| $C_2/(C_3+C_2)$, mol/mol | Downcomer | 0.0035 | 0.004 |

C2 ethylene; C3 propylene; C6 1-hexene

Properties of the obtained material has been reported in table 2:

Table 2

| | | **Ex 1** | **Comp ex 2** |
|---|---|---|---|
| MFR 5 Kg/230°C | g/10min | 1,03 | 1 |
| C6- NMR | % | 2,6 | 2.8 |
| C2-NMR | % | 1,7 | 1.3 |
| X.S. | % | 6.6 | 6.5 |
| **ISO Characterization** | | | |
| Flexural modulus 24h | MPa | 830 | 910 |
| Tensile modulus 24h | MPa | 750 | 930 |
| IZOD 0°C 24h | kJ/m2 | 8 | 5.2 |
| Stress at yield | % | 26 | 27.1 |
| Elongation at break | kJ/m2 | 360 | 390 |
| Tm | °C | 136 | 135 |
| Tc | °C | 93 | 95 |

Extruded pipes with an outer diameter of 22 mm and a wall thickness of 2.8 mm have been produced and tested to Impact test and Internal pressure resistance The results have been reported on table **3**

.tabe 3

| | Ex 1 | Comp ex 2 |
|---|---|---|
| Impact test | 0 of 10 broken | 2 of 10 broken |
| Internal pressure resistance 95°/4.8 MPa | >600h | >600h |
| | | |

The impact test of the pipe obtained by using the material opf the rpesent invention shows improved results with respect to the comparative example.

## Claims

1. A terpolymer containing propylene, ethylene and 1-hexene wherein:

   (i) the content of 1-hexene derived units ranges from 1 wt% to 3.2%;
   (ii) the content of ethylene derived units is higher than 1.4 t% and fulfils the following relation (1):

   $$C2<C6-0.2 \quad (1)$$

   wherein C2 is the content of ethylene derived units wt% and C6 is the content of 1-hexene derived units wt%;
   (iii) the melt flow rate (MFR) (ISO 1133 230°C, 5 kg) ranges from 0.1 to 3.9 g/10 min;
   (iv) the melting temperature ranging from 130° C to 138° C; preferably from 132°C to 136°C.

2. The terpolymer according to claim 1 wherein the content of 1-hexene derived units ranges from 1.5 wt% to 3.0 and the content of ethylene derived units is higher than 1.5 wt%

3. The terpolymer according to any of claims 1-2 wherein relation (1) is C2<C6-0.3

4. The terpolymer according to any of claims 1-3 wherein the melt flow rate (MFR) (ISO 1133 230°C, 2.16 kg) ranges from 0.5 to 1.9 g/10 min;

5. Pipe systems and sheets comprising a polyolefin composition according to claims 1 to 4.

6. Mono- or multilayer pipes and sheets wherein at least one layer comprises the polyolefin composition according to claim 1

Europäisches Patentamt
European Patent Office
Office européen des brevets

# EUROPEAN SEARCH REPORT

Application Number
EP 11 19 1865

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2011/128146 A1 (BASELL POLIOLEFINE ITALIA SRL [IT]; CAVALIERI CLAUDIO [IT]; PRADELLA F) 20 October 2011 (2011-10-20)<br>* claims 1,3-5,8 *<br>* page 9; examples 1,3; table 2 *<br>* page 1, line 5 - line 6 *<br>* page 1, line 30 - page 2, line 12 *<br>----- | 1-6 | INV.<br>B32B1/08<br>B32B27/32<br>C08F210/06<br>F16L11/04<br>C08J5/18 |
| Y | EP 2 186 834 A1 (BOREALIS AG [AT]) 19 May 2010 (2010-05-19)<br>* claims 1,18 *<br>* paragraphs [0037], [0038], [0041], [0042], [0065] *<br>----- | 1-6 | |
| A,D | WO 2006/002778 A1 (BASELL POLIOLEFINE SRL [IT]; DE PALO ROBERTO [IT]; BECCARINI ENRICO [I) 12 January 2006 (2006-01-12)<br>* the whole document *<br>----- | 1-6 | |
| A | WO 2009/144166 A1 (BOREALIS AG [AT]; BERNREITNER KLAUS [AT]; STADLBAUER MANFRED [AT]; HAF) 3 December 2009 (2009-12-03)<br>* the whole document *<br>----- | 1-6 | TECHNICAL FIELDS SEARCHED (IPC)<br>B32B<br>C08F<br>F16L<br>C08J |

The present search report has been drawn up for all claims

1

| Place of search | Date of completion of the search | Examiner |
|---|---|---|
| Munich | 20 January 2012 | Lippert, Sigrid |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 11 19 1865

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2012

| Patent document cited in search report | Publication date | Patent family member(s) | Publication date |
|---|---|---|---|
| WO 2011128146 A1 | 20-10-2011 | NONE | |
| EP 2186834 A1 | 19-05-2010 | AT 495204 T | 15-01-2011 |
| | | CN 102216348 A | 12-10-2011 |
| | | EP 2186834 A1 | 19-05-2010 |
| | | ES 2359761 T3 | 26-05-2011 |
| | | KR 20110073585 A | 29-06-2011 |
| | | US 2011315264 A1 | 29-12-2011 |
| | | WO 2010057840 A1 | 27-05-2010 |
| WO 2006002778 A1 | 12-01-2006 | AT 394623 T | 15-05-2008 |
| | | AU 2005259555 A1 | 12-01-2006 |
| | | BR PI0512485 A | 04-03-2008 |
| | | CA 2572188 A1 | 12-01-2006 |
| | | CN 1973160 A | 30-05-2007 |
| | | EP 1759139 A1 | 07-03-2007 |
| | | ES 2306188 T3 | 01-11-2008 |
| | | JP 2008503620 A | 07-02-2008 |
| | | KR 20070027696 A | 09-03-2007 |
| | | RU 2377461 C2 | 27-12-2009 |
| | | WO 2006002778 A1 | 12-01-2006 |
| WO 2009144166 A1 | 03-12-2009 | AT 526350 T | 15-10-2011 |
| | | AU 2009253181 A1 | 03-12-2009 |
| | | CN 102105499 A | 22-06-2011 |
| | | EP 2279216 A1 | 02-02-2011 |
| | | JP 2011522075 A | 28-07-2011 |
| | | KR 20110017406 A | 21-02-2011 |
| | | US 2011104416 A1 | 05-05-2011 |
| | | WO 2009144166 A1 | 03-12-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006002778 A
- US 4399054 A
- US 45977 A
- US 4472524 A
- EP 361493 A
- EP 728769 A
- EP 1012195 A